# EUROPÄISCHE PATENTSCHRIFT

(11) **EP 3 691 834 B1**
(45) Veröffentlichungstag und Bekanntmachung des Hinweises auf die Patenterteilung: **01.09.2021**
(21) Anmeldenummer: 18785878.2
(22) Anmeldetag: 01.10.2018
(51) Int. Cl.: B25F 5/02, B25F 5/00

(54) **HANDWERKZEUG**
HAND-HELD TOOL
OUTIL À MAIN

(30) Priorität: 02.10.2017 DE 102017122855; 31.01.2018 DE 102018102162
(43) Veröffentlichungstag der Anmeldung: 12.08.2020
(73) Patentinhaber: Gustav Klauke GmbH, 42855 Remscheid (DE)
(72) Erfinder: FRENKEN, Egbert, 52525 Heinsberg (DE); LEHR, Andreas, 41468 Neuss (DE)
(74) Vertreter: Müller, Enno
(86) Internationale Anmeldenummer: PCT/EP2018/076582
(87) Internationale Veröffentlichungsnummer: WO 2019/068608

(56) Entgegenhaltungen:
- WO-A1-2015/025677
- DE-A1-102008 024 018
- DE-A1-102012 212 786
- US-A- 4 707 921
- US-A1- 2016 344 170
- US-B1- 6 904 687

## Beschreibung

### Gebiet der Technik

Die Erfindung betrifft ein zur Fernbedienung vorbereitetes Handwerkzeug gemäß dem Oberbegriff des Patentanspruchs 1, mit einem Griffbereich und einer Betätigungstaste.

### Stand der Technik

Handwerkezuge der in Rede stehenden Art sind bekannt. So bspw. in Form von Schneid- oder Pressgeräten, bspw. gemäß der EP 1 084 798 B1 (US 6,718,870 B1) oder auch gemäß EP 1 519 813 B1 (US 7,254,982 B2).

Solche Handwerkzeuge können ggf. wechselbar einen Arbeitskopf aufweisen, so bspw. zum Schneiden von Kabeln oder Leitungen. Hier wird bspw. auf eine aus der WO 2017/125272 A1 bekannte motorisch betätigbare Schere verwiesen.

Aus der DE 10 2012 212 786 A1 ist ein Handwerkzeug gemäß dem Oberbegriff des Patentanspruchs 1 mit einer Führungsstangen-Vorrichtung bekannt, die eine Werkzeugmaschinen-Betätigungseinheit aufweist. Mit der Betätigungseinheit kann die Werkzeugmaschine zur Bearbeitung eines Werkstückes ein- und/oder ausgeschaltet werden. Hierzu ist ein Elektronikkopplungselement vorgesehen, das mit einem entsprechenden Elektronikankopplungselement der Werkzeugmaschine zusammenwirkt.

Aus der WO 2015/025677 A1 ist ein Handwerkzeug bekannt, das den Betätigungsgriff einer Fernbedienung darstellt. An dem Betätigungsgriff selbst wird das Handwerkzeug betätigt.

Aus der US 6 904 687 B1 ist eine Baumbearbeitungsvorrichtung bekannt, bei der das Anbringungsteil zur Einwirkung auf die Betätigungstaste ausgebildet ist. Hierzu ist durch das im Querschnitt U-förmig gebildete Anbringungsteil ein Bolzen hindurchzustecken, der seinerseits eine Betätigungstaste im niedergedrückten Zustand hält.

Aus der US 4 707 921 A ist ein Anbringungsteil bekannt, bei welchem ein Blockierelement der Betätigungstaste im Anbringungszustand des Anbringungselementes derart beaufschlagt ist, dass die Betätigungstaste frei bedient werden kann.

Aus der US 2016/0344170 A1 ist ein fernbedienbares Werkzeug bekannt, bei welchem die Steuerung des Werkzeugs über eine Funkschnittstelle erfolgt.

Aus der DE 10 2008 024 018 A1 ist ein Verpressgerät bekannt, das keine Fernbedienung aufweist.

### Zusammenfassung der Erfindung

Ausgehend von dem dargelegten Stand der Technik beschäftigt sich die Erfindung mit der Aufgabenstellung, eine vorteilhafte Fernbedienung für ein Handwerkzeug anzugeben.

Diese Aufgabe ist beim Gegenstand des Anspruches 1 gelöst, wobei darauf abgestellt ist, dass das Anbringungsteil zur Einwirkung auf die Betätigungstaste ausgebildet ist und dass die Betätigungstaste durch einen Gehäuseabschnitt der Manschette auf Dauer der Anordnung des Anbringungsteils an dem Griffbereich in die Betätigungsstellung verlagert ist oder dass durch eine in dem Klappgelenkbereich der Manschette vorgesehene fensterartige Öffnung in einer Umfassungsstellung ein die Betätigungstaste zum Griffbereich hin begrenzender Gehäusedorn tritt, wobei das Anbringungsteil zur Einwirkung auf die Betätigungstaste ausgebildet ist.

Das Anbringungsteil ist ein von dem Handwerkzeug gesondertes Teil, bevorzugt werkzeuglos oder unter Nutzung eines üblicherweise vorhandenen Werkzeugs, wie bspw. ein Schraubendreher oder eine Zange, montier- bzw. demontierbar. Es kann zur Ausstattung des Handwerkzeuges zur Fernbedienung mit dem Anbringungsteil versehen werden. Über das Anbringungsteil kann das Handwerkzeug in einer möglichen Ausgestaltung mittelbar oder unmittelbar durch den Benutzer gehalten werden. Hierzu dient in einer möglichen Ausgestaltung ein Handhabungsfortsatz, der mit dem Anbringungsteil verbunden sein kann.

Zufolge der vorgeschlagenen Ausgestaltung ist es dem Benutzer ermöglicht, das Handwerkzeug über eine stativartige Halterung fernzubedienen. Das Handwerkzeug wird hierbei direkt vom Benutzer geführt. Arbeiten mit dem Handwerkzeug in schwer zugänglichen Bereichen sind so vereinfacht. Das Handwerkzeug kann mittels des Anbringungsteils und, bevorzugt, des Handhabungsfortsatzes an die mit dem Handwerkzeug zu bearbeitende Stelle geführt und hiernach fernbedient werden.

Der Handhabungsfortsatz kann stabartig gestaltet sein, weiter ggf. im Bereich eines freien Endes einen Handgriff aufweisen. So weist der Handhabungsfortsatz eine größte Länge auf, die dem 10- bis 100-Fachen und mehr, bspw. bis hin zu dem 1000-Fachen, der größten quer hierzu betrachteten Breite terschiedlichen Anstellungen zu der Längsachse des Anbringungsteiles ankoppelbar bzw. an dem Anbringungsteil festlegbar. Bevorzugt erfolgt die Festlegung in der gewünschten Winkelstellung werkzeuglos, bspw. durch Handbetätigung eines Spannteils.

Die Längsachse des Handhabungsfortsatzes kann zu der Längsachse des Anbringungsteils einen Winkel von etwa 15 Grad bis hin zu bspw. etwa 165 Grad einschließen, weiter auch Winkelbeträge zwischen diesen beiden vorgenannten Beträgen, so weiter bspw. 30 Grad oder 65 Grad oder 102 Grad. Auch können schrittweise Winkelstellungen eingenommen werden, so bspw. alle 15°, 30° oder 45°. Alternativ ist eine stufenlose Einstellung denkbar.

Der Handhabungsfortsatz kann in einer möglichen Ausgestaltung um eine quer zu dessen Längsachse gerichtete geometrische Achse schwenkbar an dem Anbringungsteil dauerhaft oder auch lösbar angeordnet sein.

Das Anbringungsteil ist gemäß der Ausgestaltung zur Einwirkung auf die Betätigungstaste des Handwerkzeugs ausgebildet. Die Einwirkung kann willensbetont auslösbar sein, bspw. zufolge einer entsprechenden Fernbedienung, weiter bspw. über den Handhabungsfortsatz. Auch kann, wie weiter zudem bevorzugt, eine dauerhafte Einwirkung auf die Betätigungstaste über das Anbringungsteil gegeben sein, sobald diese an den Griffbereich des Handwerkzeugs festgesetzt ist. In einer möglichen Ausgestaltung verlagert das Anbringungsteil einen üblicherweise handbetätigbaren Taster des Handwerkzeugs.

In weiterer Ausgestaltung kann das Handwerkzeug zur Funkfernbedienung ausgebildet sein und hierzu einen Funk-Empfänger aufweisen und eine Steuerungseinheit, die ausgebildet ist empfangene Funksignale in eine Auslösung einer Arbeitsbewegung des Handwerkzeugs umzusetzen. Zur Funkfernbedienung kann bspw. eine Bluetooth-Verbindung genutzt werden, darüber hinaus ebenfalls bspw. eine WLAN- oder WPAN-Verbindung.

Die Energieversorgung von bspw. Funk-Empfänger und Steuerungseinheit kann über einen in einer möglichen Ausgestaltung auch das Handwerkzeug versorgenden Akkumulator oder dergleichen erfolgen. Auch kann eine gesonderte Versorgung vorgesehen sein, bspw. durch Anordnung eines Akkumulators allein für die Funk- und Steuereinheiten.

Der Handhabungsfortsatz kann ein Betätigungselement aufweisen, zur Fernauslösung einer Arbeitsbewegung des Handwerkzeugs. Das Betätigungselement kann ein Schalter oder ein Taster sein, weiter bspw. ein Sensor, wie bspw. ein kapazitiver Sensor. In bevorzugter Ausgestaltung liegt das Betätigungselement ergonomisch günstig im Bereich eines bspw. vorgesehenen Handgriffes, weiter bspw. im Bereich eines Handgriffes eines Handhabungsteils.

In diesem Zusammenhang erweist es sich als günstig, wenn der Handhabungsfortsatz einen durch das Betätigungselement wirkverbundenen Funk-Sender aufweist, zur Wirkverbindung mit dem Funk-Empfänger des Handwerkzeugs. Die Betätigung des Betätigungselementes durch den Benutzer löst über den Funk-Sender die Ausstrahlung eines entsprechenden Signals, das durch den Funk-Empfänger im Handwerkzeug empfangen und durch die werkzeugseitige Steuerungseinheit in ein Signal zur Auslösung einer Arbeitsbewegung des Handwerkzeugs umgesetzt werden kann.

In dem Handhabungsfortsatz kann zur Versorgung insbesondere des Funk-Sensors, darüber hinaus aber auch zur Versorgung einer weiter gegebenen Steuerungseinheit usw. ein Energiespeicher, bspw. in Form eines Akkumulators vorgesehen sein. In einer alternativen Ausgestaltung kann die Versorgung auch über das Anbringungsteil durch die Stromversorgung des Handwerkzeugs erfolgen. Mit Anbringen des Anbringungsteils an dem Handwerkzeug erfolgt dann eine entsprechende elektrische Kontaktierung.

Das Anbringungsteil ist als eine zur Umfassung des Griffbereiches ausgebildete Manschette vorgesehen. Die Manschette ist hierbei so im Griffbereich ansetzbar, dass das Handwerkzeug unverlierbar umfasst ist. So kann die Manschette bspw. unter Aufbringung einer Federkraft den Griffbereich des Handwerkzeugs umspannen.

Zur günstigen Montage und Demontage besteht die Manschette aus zwei miteinander klappbeweglich verbundenen Manschettenteilen. Diese können um eine bspw., wie auch bevorzugt, gleichgerichtet zur Längsachse des Anbringungsteils verlaufende Achse auf- bzw. zugeschwenkt werden. Dies erleichtert das Anordnen an dem Handwerkzeug, wie auch die entsprechende Entfernung.

Ein Manschettenteil kann hierzu im Wesentlichen in einem Querschnitt quer zur Erstreckung der Längsachse in etwa halbschalenförmig gebildet sein.

In der Umfassungsstellung können die Manschettenteile mechanisch miteinander verriegelt sein. Die Verriegelung kann bspw. durch eine Verrastung gegeben sein. Ebenfalls ist die Verriegelung zur Entfernung des Anbringungsteiles aufhebbar, bevorzugt zerstörungsfrei aufhebbar. So kann weiter auch diesbezüglich eine Verschraubung vorgesehen sein. Bevorzugt ist diesbezüglich eine werkzeuglose Ver- und Entriegelung vorgesehen.

In einer möglichen Ausgestaltung kann an dem Anbringungsteil eine Halterungsausformung für den Handhabungsfortsatz ausgebildet sein. Die Halterungsausformung kann die Abnahme des Handhabungsfortsatzes ermöglichen, bspw. zur Ermöglichung einer günstigen Verstauung der bei Bedarf an das Handwerkzeug ansetzbaren Zusatzteile.

Zur Festlegung des Handhabungsfortsatzes an dem Anbringungsteil, darüber hinaus in einer möglichen Ausgestaltung zur winkelmäßigen Festlegung des Handhabungsfortsatzes relativ zu dem Anbringungsteil, kann die Halterungsausformung eine Vielzahl von Vorsprüngen aufweisen, zum Eingriff in entsprechend positionierte und angepasste Vertiefungen in dem Handhabungsfortsatz. Alternativ kann die Halterungsausformung eine Vielzahl von Vertiefungen aufweisen, zur Aufnahme von entsprechend positionierten und dimensionierten Vorsprüngen an dem Handhabungsfortsatz.

So können bspw. mit Bezug auf eine mögliche Schwenkachse, um welche der Handhabungsfortsatz relativ zu dem Anbringungsteil schwenkbar sein kann, in vorgegebenen Winkelabständen Vertiefungen bzw. Vorsprünge an der Halterungsausformung vorgesehen sein, unter Nutzung welcher der Handhabungsfortsatz in vorgegebenen Winkelschritten, bspw. 15 Grad-Schritten, festlegbar sein kann.

Das Handwerkzeug kann einen Elektromotor aufweisen, der zur Durchführung einer Arbeitsbewegung betätigbar ist. Bei einer üblichen Handhabung des Handwerkzeuges wird der Betrieb des Elektromotors ausgelöst zufolge Betätigung der Betätigungstaste im Griffbereich. Bei einer Fernbedienung des erfindungsgemäßen Handwerkzeugs wird der Elektromotor in einer möglichen Ausgestaltung über ein generiertes Funksignal, übersetzt von der Steuerungseinheit, betätigt.

Der Elektromotor kann in dem Handwerkzeug eine Spindel antreiben. Alternativ kann der Elektromotor eine Hydraulikpumpe antreiben, zur Einwirkung auf einen hydraulisch betätigbaren Arbeitskolben. Über die Spindel oder den Arbeitskolben wird auf das Werkzeug eingewirkt.

So kann das Handwerkzeug eine oder mehrere Arbeitsbacken aufweisen, die aus einer Freigabestellung in eine Arbeitsstellung und aus einer Arbeitsstellung in eine Freigabestellung bewegbar sind. Die Arbeitsbacken können als Schneiden ausgebildet sein. Weiter kann auch nur eine aus einer Freigabestellung in eine Arbeitsstellung und umgekehrt verlagerbare Arbeitsbacke bspw. eine Schneide darstellen, die mit einer feststehenden Gegen-Arbeitsbacke zusammenwirkt.

Auch kann das Handwerkzeug zur selbsttätigen Bewegung der Arbeitsbacke aus der Arbeitsstellung in die Freigabestellung nach Ablauf einer vorgegebenen Zeitspanne ausgebildet sein.

Zur Durchführung eines Arbeitsvorganges, bspw. zur Bewegung, weiter bspw. schneidenden Bewegung der Arbeitsbacke aus der Freigabestellung in die Arbeitsstellung, ist bei einer möglichen Funk-Fernbedienung ein bis zum Erreichen der Arbeitsstellung fortwährendes Funksignal nötig, das zufolge Betätigung des Betätigungselements generiert wird. Eine mögliche Unterbrechung der Funkverbindung hat bevorzugt den sofortigen Stillstand der Arbeitsbacke zufolge. Wird diese Funkverbindung innerhalb einer vorgegebenen Zeitspanne von bspw. 20 bis 60 Sekunden, weiter bspw. 30 Sekunden, nicht wieder aufgebaut, oder wird in dieser Zeit kein neues Signal vom Sender empfangen, so wird die Arbeitsbacke selbsttätig aus dieser Arbeitsstellung bzw. Zwischenstellung zurück in die Freigabestellung, die bevorzugt der Grundstellung entspricht, bewegt.

Bei einer möglichen Ausgestaltung ist eine (zunächst) ständige Leitungsverbindung gegeben, die letztlich zu einer Entleerung des Akkumulators des Handwerkzeuges führen kann. Bevorzugt ist die Leitungsverbindung ohne eine Bewegung der Betätigungstaste (zurück in eine Nichtbetätigungsstellung) unterbrochen nach Ablauf einer vorgegebenen Zeitspanne von bspw. 15 bis 60 Minuten, weiter bspw. etwa 30 Minuten. Die Überschreitung der vorgegebenen Zeitspanne kann durch die im Handwerkzeug vorgesehene Steuerungseinheit überwacht werden. Mit Überschreiten der Zeit kann ein elektronischer Schalter die stromleitende Verbindung trennen, weiter bspw. unter Nutzung eines elektronischen Schalters (Halbleitungsschalters), wie bspw. eines Thyristors oder dergleichen.

Die Anbringung des Anbringungsteils an dem Handwerkzeug kann durch das Handwerkzeug detektiert werden. In einer möglichen Ausgestaltung kann hierzu ein (gesonderter) Taster oder Sensor bspw. im Griffbereich, in dem das Anbringungsteil angeordnet werden soll, vorgesehen sein. Auch eine kontaktlose Detektierung ist diesbezüglich möglich, beispielsweise mittels eines RFID-Sensors. Ein detektiertes Anbringungsteil versetzt das Handwerkzeug bevorzugt aus einem Handbetrieb- in einen Fernsteuermodus.

Auch kann vorab manuell durch den Benutzer der Fernsteuermodus eingestellt werden, wonach weiter beispielsweise das Handgerät per Bluetooth nach einem Kupplungspartner (Anbringungsteil) in der Umgebung sucht. Dabei wird bevorzugt nach einem vorbestimmten Partner gesucht, beispielsweise mit nur einer individualisierten Adresse.

Auch im gekoppelten Zustand erfolgt bevorzugt eine Abfrage ("Polling Timer") der Betätigungstasten des Handwerkzeugs und ggf. des Anbringungsteils. Sofern während der stetigen Abfrage innerhalb eines vorgegebenen Zeitraums kein Signal des Anbringungsteils erfasst wird, kann das zu einer Unterbrechung der Verbindung führen.

Bevorzugt wird an dem Handgerät erst durch einen sogenannten "Doppel-Klick" auf den geräteseitigen Taster im Handbetriebsmodus ein Arbeitszyklus ausgelöst. Entsprechend wird bei einer solchen Ausgestaltung allein durch Anlegen des Anbringungsteils unter Beaufschlagung des Tasters keine Auslösung erreicht.

Auch mit dem Betätigungselement an dem Anbringungsteil bzw. an dem Handhabungsfortsatz ist bevorzugt nur per "Doppel-Klick" ein Signal auslösbar, um so einer versehentlichen Bedienung vorzubeugen.

Das Anbringungsteil und/oder der Handhabungsfortsatz können gemäß einer bevorzugten Ausgestaltung elektrisch isolierende Eigenschaften bieten.

### Kurze Beschreibung der Zeichnungen

Nachstehend ist die Erfindung anhand der beigefügten Zeichnungen erläutert, die aber lediglich ein Ausführungsbeispiel darstellt. Es zeigt:
- Fig. 1: In einer perspektivischen Explosionsdarstellung ein Handwerkzeug mit einem zuordbaren Anbringungsteil und einem Handhabungsfortsatz;
- Fig. 2: das Handwerkzeug in einer Längsschnittdarstellung;
- Fig. 3: eine der Figur 1 im Wesentlichen entsprechende perspektivische Darstellung nach Anordnung des Anbringungsteils an dem Handwerkzeug, sowie Anordnung des Handhabungsfortsatzes an dem Anbringungsteil;
- Fig. 4: das Anbringungsteil in einer Vorderansicht, eine Umfassungsstellung betreffend;
- Fig. 5: die Ansicht gemäß Pfeil V in Figur 4;
- Fig. 6: die Ansicht gemäß Pfeil VI in Figur 4;
- Fig. 7: die Unteransicht gegen das Anbringungsteil;
- Fig. 8: die Draufsicht auf das Anbringungsteil;
- Fig. 9: den Schnitt gemäß der Linie IX-IX in Figur 4;
- Fig. 10: eine der Figur 4 im Wesentlichen entsprechende Darstellung, betreffend Klapp-Offenstellung des Anbringungsteils;
- Fig. 11: eine Schnittdarstellung durch das Anbringungsteil gemäß Figur 9, bei umfasstem Griffbereich des Handwerkzeugs;
- Fig. 12: die Anordnung des Anbringungsteils an einem Handwerkzeug in alternativer Ausführung.

### Beschreibung der Ausführungsformen

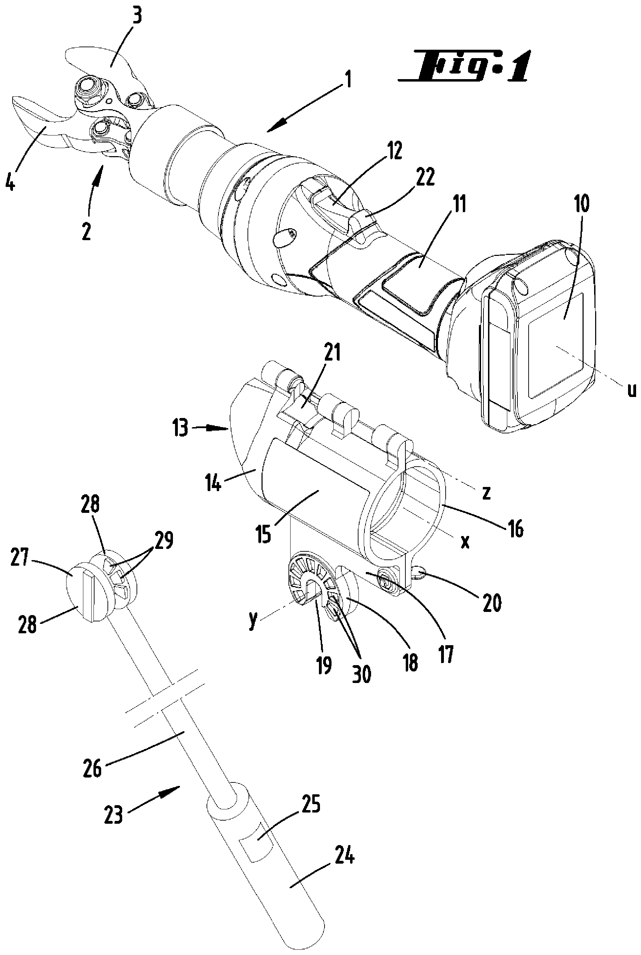

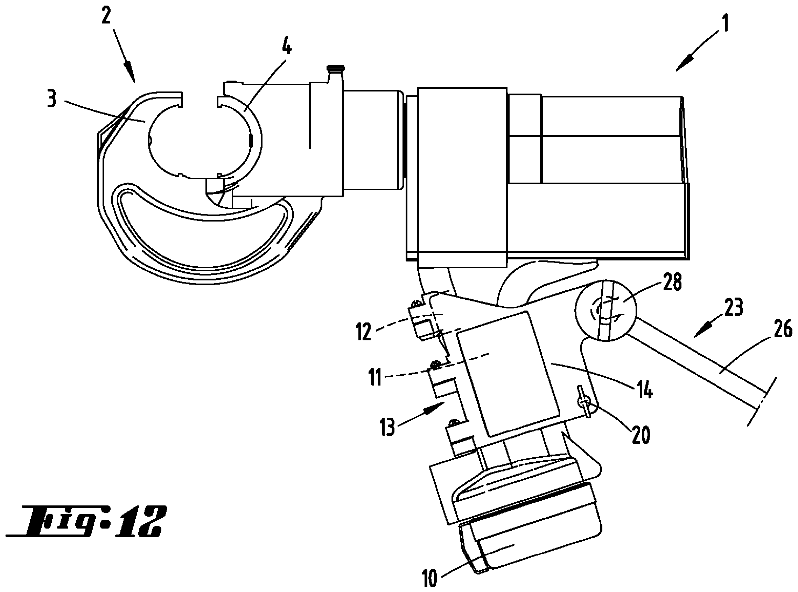

Dargestellt und beschrieben ist, zunächst mit Bezug zu Figur 1, ein Handwerkzeug 1 in Form eines elektromotorisch betriebenen Handwerkzeuges. In der Darstellung ist diesbezüglich ein elektrohydraulisches Gerät dargestellt, das mit Bezug zu Figur 1 im Wesentlichen langgestreckt stabförmig ausgebildet ist, was eine Einhandbedienung des Gerätes unterstützt. Ein solches stabförmiges Gerät ist aus der eingangs zitierten EP 1519 813 B1 bekannt. Auch kann das Handwerkzeug 1 bspw. gemäß Figur 12 in Form eines elektrohydraulischen Gerätes pistolenförmig gestaltet sein. Ein solches Gerät ist aus der eingangs zitierten EP 1 084 798 B1 bekannt.

An dem Handwerkzeug 1 ist ein Arbeitskopf 2 angeordnet, der in dem dargestellten Ausführungsbeispiel zwei Arbeitsbacken 4 aufweist. Diese können als Schneiden ausgebildet und aus einer Freigabestellung in eine Arbeitsstellung um eine Drehachse schwenkbar sein. Bezüglich des dargestellten Arbeitskopfes 2 wird auf die eingangs erwähnte WO 2017/125272 A1 verwiesen.

Der dargestellte Arbeitskopf 2 ist nur exemplarisch. Bevorzugt ist dieser auswechselbar. So kann das Handwerkzeug 1 weiter auch bspw. als Pressgerät oder dergleichen verwendet werden, darüber hinaus bspw. als Stanzgerät usw.

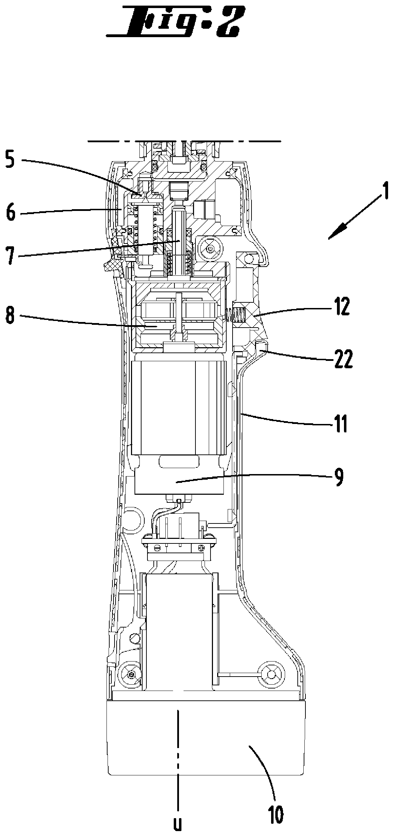

Mit Bezug zu der Darstellung in Figur 2 ist in dem oberen Bereich des als Rumpfgerät ausgebildeten Handwerkzeugs 1 der Zusammenhang mit dem in der genannten EP 1 519 813 B1 beschriebenen Gegenstand etwa im Hinblick auf ein Rücklaufventil 5, einen Tank 6 und einen Pumpstößel 7 zu erkennen. In diesem Zusammenhang ist insgesamt auch zu erkennen, dass eine Hydraulikmittelpumpe 8 und ein Elektromotor 9 für die Hydraulikmittelpumpe 8 in Hintereinanderanordnung vorgesehen sind. Die elektrische Versorgung insbesondere des Elektromotors 9, darüber hinaus aber auch einer nicht dargestellten Steuerungseinheit und weiterer elektronischer Komponenten in dem Handwerkzeug 1 ist gegeben durch die Anordnung eines Akkumulators 10.

Weiter weist das Handwerkzeug einen Griffbereich 11 auf, zur üblichen Umfassung des Handwerkzeug-Gehäuses mittels einer Hand. Ergonomisch günstig ist zugeordnet dem Griffbereich 11 eine Betätigungstaste 12 vorgesehen.

Dem Handwerkzeug 1, insbesondere dessen Griffbereich 11 ist zur Fernbedienung des Handwerkzeugs 1 ein Anbringungsteil 13 zuordbar. Dieses ist in Form einer Manschette 14 ausgebildet, aufweisend in der dargestellten Ausführungsform zwei halbschalenförmige Manschettenteile 15 und 16.

Die Manschettenteile 15 und 16 sind miteinander klappbeweglich verbunden, dies über eine geometrische Klappachse y, die sich bevorzugt in Erstreckungsrichtung einer Längsachse x der Manschette 14 erstreckt.

Die geschlossene Manschette 14 ist bezüglich ihres inneren Querschnittes und/oder Länge angepasst an die Gehäuseausformung des Handwerkzeuges 1 im Griffbereich 11.

Diametral gegenüberliegend zu dem Gelenkbereich der Manschettenteile 15 und 16 können an diesem lappenartige Ausleger 17 angeformt sein, welche wiederum eine Halterungsausformung 18 tragen bzw. ausbilden.

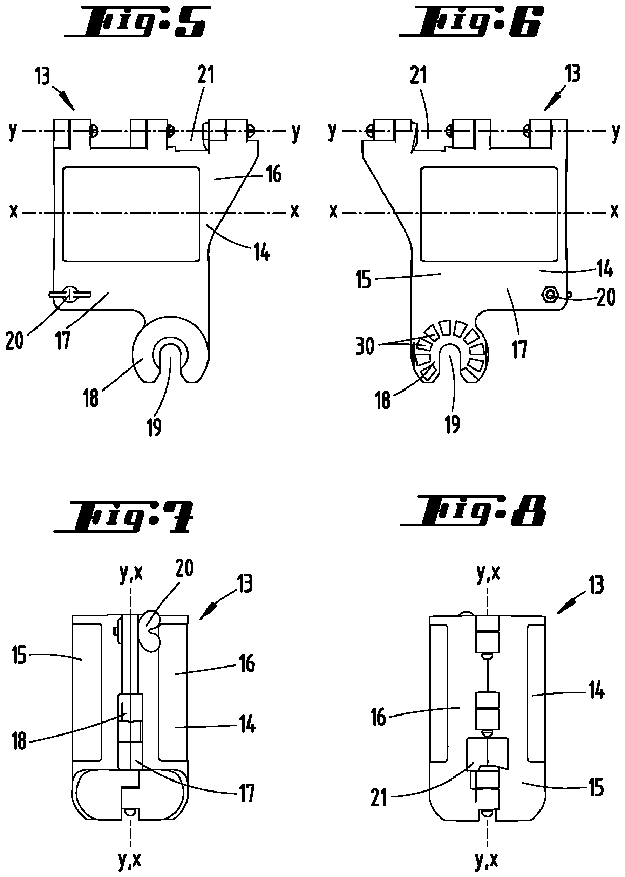

Die Halterungsausformung 18 kann im Wesentlichen mit Bezug auf eine Seitenansicht gemäß Figur 5 bzw. 6 U-förmig gestaltet sein, mit einer von der Klappachse y wegweisenden U-Öffnung 19.

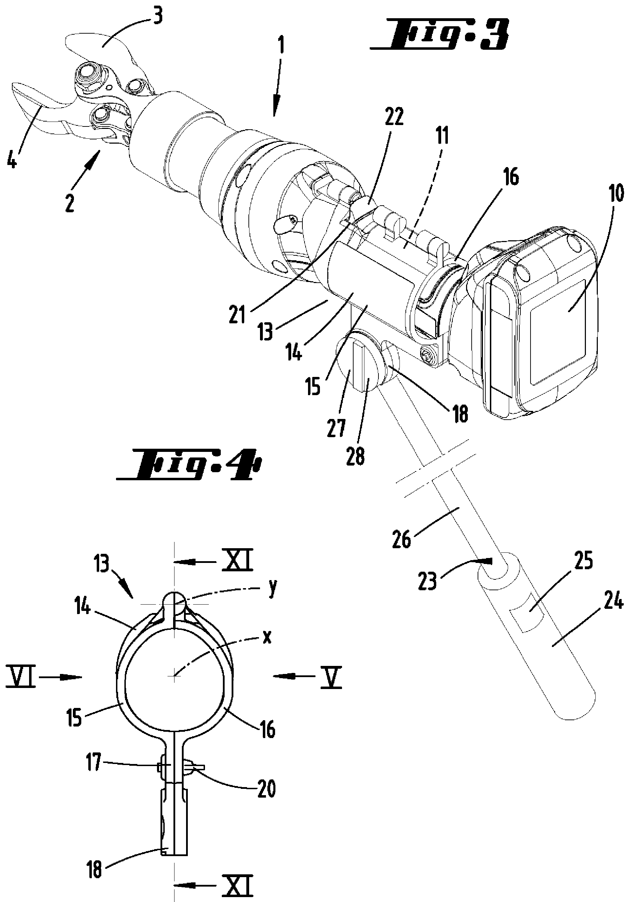

Die Schließstellung der Manschette 14 bzw. die Umfassungsstellung der Manschette 14 gemäß der Darstellung in Figur 3 oder Figur 12 ist mechanisch verriegelbar. In dem dargestellten Ausführungsbeispiel ist dies unter Nutzung einer im Bereich der Ausleger 17 wirkenden Verschraubung 20 erreicht.

Das Anbringungsteil 13 dient zur Ermöglichung einer Fernbedienung des Handwerkzeuges 1 gemäß der Darstellung in Figur 3 bzw. Figur 12.

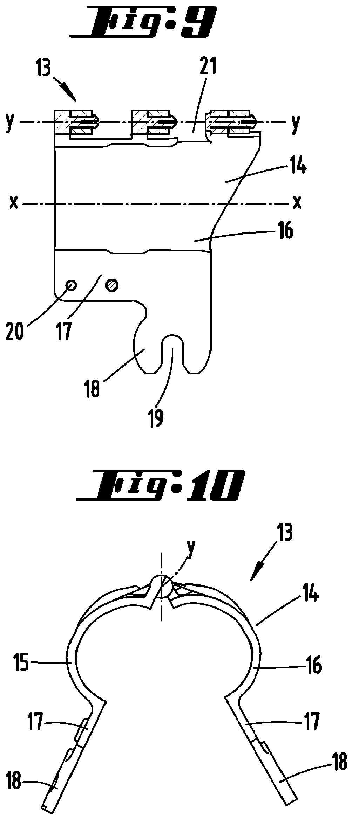

Hierzu wird das dargestellte Anbringungsteil 13 unter Aufhebung der Verriegelung durch die Verschraubung 20 zunächst um die Klappachse y aufgeschwenkt (siehe hierzu auch Figur 9) und über den Griffbereich 11 geführt. Unter Schließung der Manschettenteile 15 und 16 und abschließender Verriegelung mittels der Verschraubung 20 ist das Anbringungsteil 13 an dem Handwerkzeug 1 im Griffbereich 11 befestigt, hierbei bevorzugt sowohl bezüglich einer Längsachse u des Griffbereiches 11 als auch in Umfangsrichtung fixiert. Bevorzugt ist eine Klemmfestlegung erreicht.

Längsachse u des Griffbereiches 11 und die Längsachse x des Anbringungsteiles 13 sind bevorzugt gleichgerichtet, fallen ggf. zusammen.

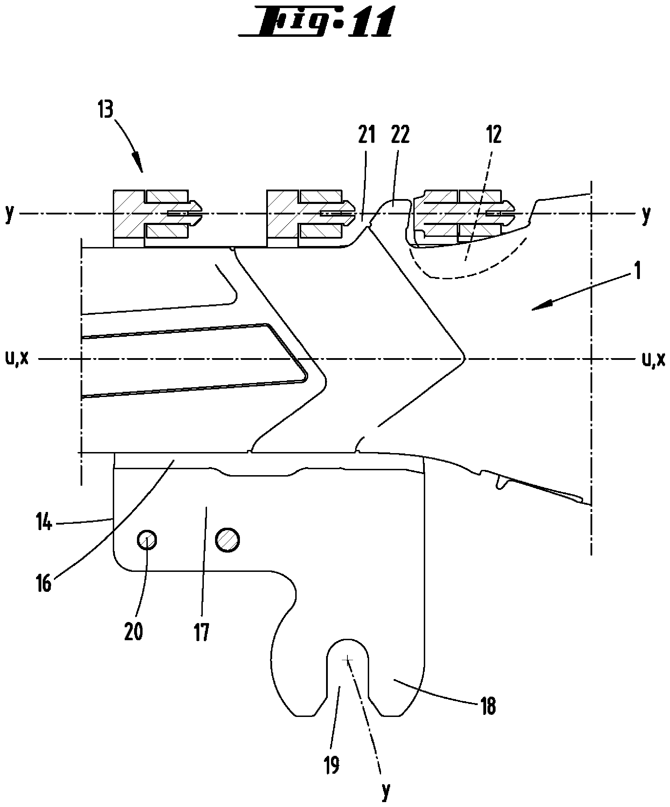

Durch eine im Klappgelenkbereich des Anbringungsteiles 13 vorgesehene fensterartige Öffnung 21 kann in der Umfassungsstellung ein die Betätigungstaste 12 zum Griffbereich 11 hin begrenzender Gehäusedorn 22 treten (siehe auch Figur 11).

Die Betätigungstaste 12 ist durch einen Gehäuseabschnitt des Anbringungsteils 13 bzw. einen Gehäuseabschnitt der Manschette 14 in die Betätigungsstellung gemäß Figur 11 auf Dauer der Anordnung des Anbringungsteils 13 an dem Griffbereich 11 verlagert.

Entsprechend kann mit Ansetzen des Anbringungsteils 13 zufolge der hierbei erfolgenden Auslösung über die Betätigungstaste 12 zunächst ein Arbeitsvorgang durchgeführt werden, welcher bevorzugt selbsttätig durch einen ventilgesteuerten Kolbenrücklauf und damit einhergehendem Rückschwenken oder Rücklaufen der Arbeitsbacken 3 und 4 endet. Bezüglich des hierzu bespielhaft eingesetzten Rücklaufventils wird beispielsweise auf die WO 2016/134951 A1 verwiesen.

Aus der vorgenannten WO-Anmeldung ist es auch bekannt, ein solches Rücklaufventil elektronisch, beispielsweise elektromagnetisch über ein entsprechendes Steuersignal auszulösen.

Alternativ kann aber auch vor Anbringen des Anbringungsteils 13 elektronisch oder auch mechanisch eine Umstellung des Handwerkzeuges 1 auf Fernbedienungsbetrieb erfolgen, so dass die über die Manschette 14 vorgenommene Betätigung der Betätigungstaste 12 keine Auslösung zur Verlagerung der Arbeitsbacken 3 und 4 zur Folge hat. Auch kann diesbezüglich eine automatische Erkennung des Anbringungsteils 13 vorgesehen sein, bevorzugt bereits im Zuge des Ansetzens.

Die Bedienung des Handwerkzeuges 1 erfolgt nach Ansetzen des Anbringungsteiles 13 bevorzugt allein ferngesteuert, beispielsweise zufolge Nutzung einer elektrischen oder mechanischen Fernbedienung, bevorzugt in Art einer Funk-Fernbedienung. Hierzu kann das Handwerkzeug 1 einen nicht dargestellten Funk-Empfänger aufweisen, darüber hinaus zumindest weiter eine Steuerungseinheit, die die empfangenen Funksignale in eine Auslösung einer Arbeitsbewegung umsetzt.

An dem Anbringungsteil 13 ist ein Handhabungsfortsatz 23 anordbar. Hierbei kann es sich, wie dargestellt, um eine stabartige Ausgestaltung handeln, mit einem endseitigen Handgriff 24. In oder nahe dem Handgriff 24 kann bevorzugt ein Betätigungselement 25 angeordnet sein, zur Fernauslösung einer Arbeitsbewegung des Handwerkzeuges 1. Es kann sich hierbei um einen üblichen Schalter oder mechanisch wirksamen Taster handeln, darüber hinaus aber auch um einen beispielsweise kapazitiven Sensor.

Der Handhabungsfortsatz 23 weist einen gegebenenfalls teleskopartig ausfahrbaren Stab 26 auf, an welchem abgewandt dem Handgriff 24 eine zur Zusammenwirkung mit der Halterungsausformung 18 des Anbringungsteils 13 ausgebildete Gegen-Halterungsausformung 27 angeordnet ist.

Die Gegen-Halterungsausformung 27 kann, wie in den Darstellungen angedeutet, zwei zueinander distanzierte, scheibenartige Spannteile 28 aufweisen, die über einen nicht dargestellten, in der Halterungsstellung in die U-Öffnung 19 der Halterungsausformung 18 eingreifenden Gewindezapfen verbunden sein können.

Zumindest eines der Spannteile 28 kann nach axial innen eine Mehrzahl von Vorsprüngen 29 aufweisen, die in Umfangsrichtung bevorzugt gleichmäßig zueinander beabstandet angeordnet sein können. Diesen gegenüberliegend sind in der Halterungsausformung 18 Vertiefungen 30 ausgebildet, in welche die Vorsprünge 29 eintauchen können.

Zufolge der vorbeschriebenen Ausgestaltung ist der Handhabungsfortsatz 23 in unterschiedlichen Winkelstellungen bezogen auf dessen Längserstreckung relativ zu der Längsachse x des Anbringungsteiles 13 an dem Anbringungsteil 13 anordbar, wobei die zufolge Verspannung festgelegte Winkelstellung bspw. infolge des Eingriffs der Vorsprünge 29 in die Vertiefungen 30 rastgesichert sein kann.

In dem Handhabungsfortsatz 23 kann weiter ein nicht dargestellter Funk-Sender vorgesehen sein, zur Übertragung eines Signals an den Funk-Empfänger im Handwerkzeug 1 bei Betätigung des Betätigungselementes 25.

Die Funktion des Betätigungselementes 25 im Handhabungsfortsatz 23 ist äquivalent zu der Funktion der Betätigungstaste 12 im Handwerkzeug 1. Entsprechend muss gemäß einer bevorzugten Ausbildung für einen vollständigen Arbeitsvorgang das Betätigungselement 25 bevorzugt bis zum Ende des Arbeitsvorganges betätigt werden. Entsprechend ist in einer möglichen Ausgestaltung zwingend ein dauerhaftes Signal bis zur Vollendung des Arbeitsvorganges, bspw. Schließvorganges der Arbeitsbacken, nötig. Eine Unterbrechung des Funksignals hat in bevorzugter Ausgestaltung den sofortigen Stopp der Arbeitsbewegung, hier insbesondere den sofortigen Stopp des Kolbenvorlaufes, zur Folge. Dies kann willentlich geschehen, aber auch infolge einer ungewollten Trennung der Funkverbindung. Unabhängig davon läuft nach Ablauf einer vorgegebenen Zeitspanne von bspw. 20, 30 oder 40 Sekunden das Handwerkzeug 1, insbesondere dessen Kolben und die hiermit verbundenen Arbeitsbacken 3 und 4 zurück in eine Freigabestellung.

**Liste der Bezugszeichen**

| | | | |
|---|---|---|---|
| 1 | Handwerkzeug | 30 | Vertiefung |
| 2 | Arbeitskopf | | |
| 3 | Arbeitsbacke | u | Längsachse |
| 4 | Arbeitsbacke | x | Längsachse |
| 5 | Rücklaufventil | y | Klappachse |
| 6 | Tank | | |
| 7 | Pumpstößel | | |
| 8 | Hydraulikmittelpumpe | | |
| 9 | Elektromotor | | |
| 10 | Akkumulator | | |
| 11 | Griffbereich | | |
| 12 | Betätigungstaste | | |
| 13 | Anbringungsteil | | |
| 14 | Manschette | | |
| 15 | Manschettenteil | | |
| 16 | Manschettenteil | | |
| 17 | Ausleger | | |
| 18 | Halterungsausformung | | |
| 19 | U-Öffnung | | |
| 20 | Verschraubung | | |
| 21 | Öffnung | | |
| 22 | Gehäusedorn | | |
| 23 | Handhabungsfortsatz | | |
| 24 | Handgriff | | |
| 25 | Betätigungselement | | |
| 26 | Stab | | |
| 27 | Gegen- Halterungsausformung | | |
| 28 | Spannteil | | |
| 29 | Vorsprung | | |

## Patentansprüche

1. Zur Fernbedienung vorbereitetes Handwerkzeug (1), mit einem Griffbereich (11), einer Betätigungstaste (12) und einem in dem Griffbereich (11) gehalternes, entfernbares Anbringungsteil (13), wobei das Anbringungsteil (13) einen Handhabungsfortsatz (23) aufweist, wobei weiter das Anbringungsteil (13) als eine zur Umfassung des Griffbereichs (11) ausgebildete Manschette (14) vorgesehen ist, und die Manschette (14) aus zwei miteinander klappbeweglich verbundenen Manschettenteilen (15,16) besteht, **dadurch gekennzeichnet, dass** das Anbringungsteil (13) zur Einwirkung auf die Betätigungstaste (12) ausgebildet ist und dass die Betätigungstaste (12) durch einen Gehäuseabschnitt der Manschette (14) auf Dauer der Anordnung des Anbringungsteils (13) an dem Griffbereich (11) in die Betätigungsstellung verlagert ist oder dass durch eine in einem Klappgelenkbereich der Manschette vorgesehene fensterartige Öffnung (21) in einer Umfassungsstellung ein die Betätigungstaste zum Griffbereich (11) hin begrenzender Gehäusedorn (22) tritt, wobei das Anbringungsteil (13) zur Einwirkung auf die Betätigungstaste (12) ausgebildet ist.

2. Handwerkzeug (1) nach Anspruch 1, **dadurch gekennzeichnet, dass** der Handhabungsfortsatz (23) in unterschiedlichen Winkelausrichtungen bezüglich einer Längsachse (x) des Anbringungsteiles (13) an das Anbringungsteil (13) ankoppelbar ausgebildet ist.

3. Handwerkzeug (1) nach einem der vorhergehenden Ansprüche, **dadurch gekennzeichnet, dass** das Handwerkzeug (1) zur Funk-Fernbedienung ausgebildet ist und hierzu einen Funk-Empfänger aufweist und eine Steuerungseinheit, die ausgebildet ist, empfangene Funksignale in eine Auslösung einer Arbeitsbewegung des Handwerkzeugs (1) umzusetzen.

4. Handwerkzeug (1) nach einem der vorhergehenden Ansprüche, **dadurch gekennzeichnet, dass** der Handhabungsfortsatz (23) ein Betätigungselement (25) aufweist, zur Fernauslösung einer Arbeitsbewegung des Handwerkzeugs (1).

5. Handwerkzeug nach Anspruch 4, **dadurch gekennzeichnet, dass** der Handhabungsfortsatz (23) einen durch das Betätigungselement (25) wirkverbundenen Funk-Sender aufweist, zur Wirkverbindung mit dem Funk-Empfänger des Handwerkzeugs (1).

6. Handwerkzeug nach einem der vorhergehenden Ansprüche, **dadurch gekennzeichnet, dass** ein Manschettenteil (15,16) halbschalenförmig gebildet ist.

7. Handwerkzeug nach einem der vorhergehenden Ansprüche, **dadurch gekennzeichnet, dass** die Manschettenteile (15,16) in der Umfassungsstellung mechanisch miteinander verriegelbar sind.

8. Handwerkzeug (1) nach einem der vorhergehenden Ansprüche, **dadurch gekennzeichnet, dass** an dem Anbringungsteil (13) eine Halterungsausformung (18) für den Handhabungsfortsatz (23) ausgebildet ist, wobei, bevorzugt, die Halterungsausformung (18) eine Vielzahl von Vorsprüngen aufweist, zum Eingriff in Vertiefungen in dem Handhabungsfortsatz.

9. Handwerkzeug nach Anspruch 8, **dadurch gekennzeichnet, dass** die Halterungsausformung (18) eine Vielzahl von Vertiefungen (30) aufweist, zur Aufnahme von Vorsprüngen (29) an dem Handhabungsfortsatz (23).

10. Handwerkzeug (1) nach einem der vorhergehenden Ansprüche, **dadurch gekennzeichnet, dass** das Handwerkzeug (1) einen Elektromotor (9) aufweist, der zur Durchführung einer Arbeitsbewegung betätigbar ist.

11. Handwerkzeug nach Anspruch 10, **dadurch gekennzeichnet, dass** der Elektromotor (9) eine Spindel antreibt.

12. Handwerkzeug nach einem der Ansprüche 10 oder 11, **dadurch gekennzeichnet, dass** der Elektromotor (9) eine Hydraulikpumpe (8) antreibt, zur Einwirkung auf einen hydraulisch betätigbaren Arbeitskolben.

13. Handwerkzeug (1) nach einem der vorhergehenden Ansprüche, **dadurch gekennzeichnet, dass** das Handwerkzeug (1) eine oder mehrere Arbeitsbacken (3, 4) aufweist, die aus einer Freigabestellung in eine Arbeitsstellung und aus einer Arbeitsstellung in eine Freigabestellung bewegbar sind.

14. Handwerkzeug nach Anspruch 13, **dadurch gekennzeichnet, dass** das Handwerkzeug (1) zur selbsttätigen Bewegung der Arbeitsbacke (3,4) aus der Arbeitsstellung in die Freigabestellung nach Ablauf einer vorgegebenen Zeitspanne ausgebildet ist.

15. Handwerkzeug (1) nach einem der vorhergehenden Ansprüche, **dadurch gekennzeichnet, dass** eine zufolge gedrückter Betätigungstaste (12) gegebene stromleitende Verbindung ohne Bewegung der Betätigungstaste (12) unterbrochen ist nach Ablauf einer vorgegebenen Zeitspanne.

## Claims

1. Hand tool (1) provided for remote control, comprising a handle region (11), an actuating button (12) and a removable attachment part (13) held in the handle region (11), the attachment part (13) having a handling extension (23), the attachment part (13) furthermore being provided as a collar (14) designed to encompass the handle region (11), and the collar (14) consisting of two collar parts (15, 16) which are connected to one another so as to be hingedly movable, **characterised in that** the attachment part (13) is designed to act on the actuating button (12) and **in that** the actuating button (12) is moved into the actuating position by a housing portion of the collar (14) for the duration of the arrangement of the attachment part (13) on the handle region (11), or **in that** a housing tang (22) which delimits the actuating button with respect to the handle region (11) passes through a window-like opening (21) provided in a hinged joint region of the collar in an encompassing position, the attachment part (13) being designed to act on the actuating button (12).

2. Hand tool (1) according to claim 1, **characterised in that** the handling extension (23) can be coupled to the attachment part (13) in different angular orientations with respect to a longitudinal axis (x) of the attachment part (13).

3. Hand tool (1) according to either of the preceding claims, **characterised in that** the hand tool (1) is designed for radio remote control and has a radio receiver for this purpose and a control unit which is designed to convert received radio signals into a triggering of a working movement of the hand tool (1).

4. Hand tool (1) according to any of the preceding claims, **characterised in that** the handling extension (23) has an actuating element (25) for remotely triggering a working movement of the hand tool (1).

5. Hand tool according to claim 4, **characterised in that** the handling extension (23) has a radio transmitter which is operatively connected by the actuating element (25) for operative connection to the radio receiver of the hand tool (1).

6. Hand tool according to any of the preceding claims, **characterised in that** a collar part (15, 16) is formed in a half-shell shape.

7. Hand tool according to any of the preceding claims, **characterised in that** the collar parts (15, 16) can be mechanically locked to one another in the encompassing position.

8. Hand tool (1) according to any of the preceding claims, **characterised in that** a holding formation (18) for the handling extension (23) is formed on the attachment part (13), the holding formation (18) preferably having a plurality of projections for engaging in recesses in the handling extension.

9. Hand tool according to claim 8, **characterised in that** the holding formation (18) has a plurality of recesses (30) for receiving projections (29) on the handling extension (23).

10. Hand tool (1) according to any of the preceding claims, **characterised in that** the hand tool (1) has an electric motor (9) which can be actuated to carry out a working movement.

11. Hand tool according to claim 10, **characterised in that** the electric motor (9) drives a spindle.

12. Hand tool according to either of claims 10 or 11, **characterised in that** the electric motor (9) drives a hydraulic pump (8) for acting on a hydraulically actuatable working piston.

13. Hand tool (1) according to any of the preceding claims, **characterised in that** the hand tool (1) has one or more working jaws (3, 4) which can be moved from a release position into a working position and from a working position into a release position.

14. Hand tool according to claim 13, **characterised in that** the hand tool (1) is designed to automatically move the working jaw (3, 4) from the working position into the release position after a predetermined period of time has elapsed.

15. Hand tool (1) according to any of the preceding claims, **characterised in that** a current-conducting connection produced as a result of the actuating button (12) being pressed is interrupted without movement of the actuating button (12) after a predetermined period of time.

## Revendications

1. Outil à main (1) prévu pour être commandé à distance, comprenant une région de poignée (11), un bouton d'actionnement (12) et une partie de fixation (13) qui est maintenue dans la région de poignée (11) et qui est amovible, dans lequel la partie de fixation (13) a une extension de manipulation (23), dans lequel, en outre, la partie de fixation (13) est prévue en tant que manchon (14) formé pour entourer la région de poignée (11), et le manchon (14) se compose de deux parties de manchon (15, 16) reliées ensemble de manière articulée, **caractérisé en ce que** la partie de fixation (13) est conçue pour agir sur le bouton d'actionnement (12) et **en ce que** le bouton d'actionnement (12) est déplacé dans la position d'actionnement par une partie de boîtier du manchon (14) pendant la durée de l'agencement de la partie de fixation (13) sur la région de poignée (11) ou **en ce qu'**un ergot de boîtier (22) qui délimite le bouton d'actionnement vers la région de poignée (11), passe à travers une ouverture en forme de fenêtre (21) prévue dans une région d'articulation du manchon dans une position d'entourage, la partie de fixation (13) étant conçue pour agir sur le bouton (12).

2. Outil à main (1) selon la revendication 1, **caractérisé en ce que** l'extension de manipulation (23) est conçue pour être couplée à la partie de fixation (13) dans différentes orientations angulaires par rapport à un axe longitudinal (x) de la partie de fixation (13).

3. Outil à main (1) selon l'une des revendications précédentes, **caractérisé en ce que** l'outil à main (1) est conçu pour une télécommande radio et comprend à cet effet un récepteur radio et une unité de commande qui est conçue pour convertir des signaux radio reçus en un déclenchement d'un mouvement de travail de l'outil à main (1).

4. Outil à main (1) selon l'une des revendications précédentes, **caractérisé en ce que** l'extension de manipulation (23) comprend un élément d'actionnement (25) pour déclencher à distance un mouvement de travail de l'outil à main (1).

5. Outil à main selon la revendication 4, **caractérisé en ce que** l'extension de manipulation (23) comprend un émetteur radio relié fonctionnellement par l'élément d'actionnement (25) et servant à la liaison fonctionnelle avec le récepteur radio de l'outil à main (1).

6. Outil à main selon l'une des revendications précédentes, **caractérisé en ce qu'**une partie de manchon (15, 16) est formée en forme de demi-coquille.

7. Outil à main selon l'une des revendications précédentes, **caractérisé en ce que** les parties de manchon (15, 16) peuvent être verrouillées mécaniquement ensemble dans la position d'entourage.

8. Outil à main (1) selon l'une des revendications précédentes, **caractérisé en ce qu'**une formation de maintien (18) pour l'extension de manipulation (23) est formée sur la partie de fixation (13), dans lequel, de préférence, la formation de maintien (18) comprend une pluralité de saillies pour engagement dans des évidements dans l'extension de manipulation.

9. Outil à main selon la revendication 8, **caractérisé en ce que** ladite formation de maintien (18) comprend une pluralité d'évidements (30) pour recevoir des saillies (29) sur ladite extension de manipulation (23).

10. Outil à main (1) selon l'une des revendications précédentes, **caractérisé en ce que** ledit outil à main (1) comprend un moteur électrique (9) qui peut être activé pour effectuer un mouvement de travail.

11. Outil à main selon la revendication 10, **caractérisé en ce que** ledit moteur électrique (9) entraîne une broche.

12. Outil à main selon l'une des revendications 10 ou 11, **caractérisé en ce que** le moteur électrique (9) entraîne une pompe hydraulique (8) pour agir sur un piston de travail actionnable hydrauliquement.

13. Outil à main (1) selon l'une des revendications précédentes, **caractérisé en ce que** l'outil à main (1) comprend une ou plusieurs mâchoires de travail (3, 4) qui sont mobiles depuis une position de libération à une position de travail et depuis une position de travail à une position de libération.

14. Outil à main selon la revendication 13, **caractérisé en ce que** l'outil à main (1) est conçu pour déplacer automatiquement la mâchoire de travail (3, 4) depuis la position de travail à la position de libération après l'écoulement d'une période de temps prédéterminée.

15. Outil à main (1) selon l'une des revendications précédentes, **caractérisé en ce qu'**une liaison conductrice de courant établie par l'enfoncement du bouton d'actionnement (12) est interrompue sans mouvement du bouton d'actionnement (12) après l'écoulement d'une durée prédéterminée.
